(19) Europäisches Patentamt / European Patent Office / Office européen des brevets

(11) **EP 3 796 151 A1**

(12) **EUROPEAN PATENT APPLICATION**

(43) Date of publication:
24.03.2021 Bulletin 2021/12

(51) Int Cl.:
*G06F 3/14* (2006.01)    *H04M 1/22* (2006.01)
*G09G 3/20* (2006.01)    *G09G 5/12* (2006.01)

(21) Application number: 19382811.8

(22) Date of filing: 19.09.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: **Fundación Tecnalia Research & Innovation**
**48160 Derio - Bizkaia (ES)**

(72) Inventors:
• **Sagasti Mota, Diego**
**48160 Derio - Bizkaia (ES)**
• **García Canales, Juan**
**48160 Derio - Bizkaia (ES)**
• **Aguirrezabal Colino, Pablo**
**48160 Derio - Bizkaia (ES)**

(74) Representative: **Balder IP Law, S.L.**
**Paseo de la Castellana 93**
**5ª planta**
**28046 Madrid (ES)**

(54) **METHOD, SYSTEM AND COMPUTER PROGRAM PRODUCT FOR ENABLING SPECTATORS OF A LIVE EVENT TO PARTICIPATE IN A LIGHT SHOW USING ELECTRONIC DEVICES**

(57)    A method for enabling spectators of a live event to participate in a light show using their electronic devices, comprising: providing a digital scheme representing an arrangement of seats in a location, having N rows and M columns; providing a video comprising a plurality of video frames, having a resolution of R x C pixels; converting the resolution of the video frames from R x C pixels to N x M pixels; for each pixel position $p_{ij}$ of the N x M pixels in each video frame, creating an array of pixels comprising F pixels corresponding to pixel position $p_{ij}$ of the video, F being the number of video frames comprised in the video, thus having N x M arrays of F pixels; sending from a plurality of electronic devices to a server the coordinates of a seat respectively assigned to a user of each electronic device; sending from the server to each electronic device: the array of pixels corresponding to the seat assigned to the user of the electronic device; the speed at which the array of pixels is to be displayed; and a triggering signal indicating the time at which the display of the pixels comprised in the array must start in order for all the electronic devices to start the display at the same time.

31          32          33

Fig. 3

## Description

## TECHNICAL FIELD

The present invention relates to the field of live events, such as concerts, sporting events, ceremonies and private and corporate events, and to methods and systems for creating immersive experiences between the audience and the show-field, stage, etc.-.

## STATE OF THE ART

Public or private events, such as sports matches, concerts, awards ceremonies or corporate events, have evolved in recent years to offer a more complete experience for both the public at the show and the public remotely following the event, such as on television or via streaming.

First experiences were based on each spectator showing a colored cardboard or pennant that could be found at each seat. When each cardboard or pennant was raised, a certain effect was achieved. For example, the effect of a board, such as a checkerboard, was created, or a simple word, logo or lemma was displayed. In London, at the opening ceremony of the Olympic Games in 2012, each spectator seat was provided with a 9 light-emitting diodes artifact, used to create different color effects.

Xylobands are wristbands that contain light-emitting diodes (LEDs) and radio frequency receivers. The lights inside the wristband can be controlled by a software program, which sends signals to the wristband, instructing it to light up or blink, for example. The wristband can be single color or RGB, which can emit colors in the visible spectrum. The transmitter from which signals are sent to the wristband has coverage of around 400 meters. Company PixMob also offers wearable LED devices controlled with infrared light. An iOS app is provided to manage PixMob's bracelets. Both proposals enable the generation of colorful effects that may be synchronized with sound and visuals. Similarly, company Kary Gifts offers radiofrequency-controlled LED bracelets that can be connected to a remote controller or lighting table through a DMX (Digital Multiplex) connection.

So far, there are very limited possibilities of participating in light shows using one's smart phone. For example, Human Video Board© permits to create a pattern or a logo by sending each smart phone a color associated with the seat of the phone owner. It requires an app to be installed in the smart phone. Depending on the seat in a stadium or the like, assigned to a user, a certain color is sent to the smart phone, in such a way that every phone becomes a unique pixel in a big pattern formed by the involved smart phones. However, the participation of the spectators in the show provided by Human Video Board© is relatively isolated in time and therefore very limited.

There exits therefore a need to enhance and enrich the participation of the audience in a light show during a live event using electronic devices.

## DESCRIPTION OF THE INVENTION

The computer-implemented method and system of the present invention enable spectators of a live event taking place in a location, to participate in a light show using their electronic devices. Spectators participate in the light show by contributing, with their electronic devices, such as smart phones, to emulate a huge screen on which a video is displayed. The video is comprised of a plurality of frames. Each participating electronic device becomes a unique pixel in a sequence of video frames. Pixels in each video frame are matched with one seat of the plurality of seats in the grandstand. The video resolution is adjusted / converted to the available seats. Different conventional techniques of video resolution conversion may be used. This is done at a computing device, such as a personal computer. The color or, in general, light assigned to the unique pixel at each time in the video sequence depends on the seat in the stadium -or other location-, assigned to the user of the electronic device. Each electronic device displays the sequence of pixels that has been assigned in a synchronous way with respect to other electronic devices displaying their respectively assigned sequence of pixels. The whole execution is managed by a managing entity, which may be a local computer, acting as master computer. The managing entity may alternatively be a software application, for example located in the cloud. The managing entity, such as master computer, may be located locally in the vicinity of the location in which the live event is going to take place, or in the cloud. It may be accessible through the internet.

The location may be a stadium, theater, hall, congress center, auditorium or the like. A digital scheme representing a flat representation of the arrangement of seats in the grandstands of the location is used. The digital scheme of the seats arrangement may be obtained with any suitable program or software, such as CAD program or similar functionality software. The location is conceived as a collection of seats (grandstand or group of grandstands), wherein each seat is considered as, or corresponds to, one pixel in a video frame. In general, grandstands or areas dedicated to the spectators in stadiums, halls or other locations, may have hundreds or thousands of seats in different configurations, such as in a variable number of levels, and with a heterogeneous number of seats per level, including aisles or different division elements in the different levels. In general, the number of pixels in each video frame does not match the number of seats in the location. In fact, the resolution of a typical video frame is usually higher than the "resolution" in terms of seats of a stadium or the like, understanding each seat as a unique pixel. Therefore, a pixel adaptation must be performed. In other words, if the video has a higher resolution than the seats resolution (considering that during the light show one seat corresponds to one pixel), the pixel resolution in the video must be reduced, maintaining the ratio aspect.

In the context of the present invention, taking into account current technology, the resolution of the video to be displayed, prior to performing an adaptation to the seats of the digital scheme, may be for example, but not limiting, 720p or 1080p. It is known that 720p, also referred to as HD (High Definition), means 1280 x 720 pixels; number 720 stands for the 720 horizontal scan lines of image display resolution, also known as 720 pixels of vertical resolution. Letter p stands for progressive scan, *i.e.* non-interlaced. A widescreen aspect ratio of 16:9 is typically assumed, implying a resolution of 2.1 megapixels. It is also known that 1080p, also referred to as full HD (full High Definition), means 1920 x 1080 pixels, that is to say, 1,920 pixels displayed across a screen horizontally and 1,080 pixels down the screen vertically. A widescreen aspect ratio of 16:9 is typically assumed, implying a resolution of 2.1 megapixels. Nevertheless, one skilled in the art will understand that the evolution of technology may enable to increase video resolution to 4K (also referred to as 4K Ultra HD, having horizontal display resolution of approximately 4,000 pixels), 8K (also referred to as 8K Ultra HD, having horizontal display resolution of approximately 8,000 pixels) and beyond.

The method and system also require a server enabling a platform, such as a multiplayer platform, to which the participating electronic devices belong. This platform provides a room service to the participating electronic devices. Each electronic device sends the coordinates of the assigned seat to the server. In other words, it may send its position -for example sector, level, column; or x, y coordinates. Alternatively, instead of sending the coordinates of the assigned seat, the bar code or QR code of the ticket may be sent, from which the location of the user in the stadium may be extracted. Electronic devices need to access the Internet in order to communicate with the server. Electronic devices therefore need network connectivity by means of a wired or wireless communications interface. The communications interface is preferably wireless. Once the server knows the location in the grandstand to be occupied by a user of the electronic device, it sends the electronic device the array of pixels to be sequentially displayed when requested during the live event. The different arrays of pixels (N x M arrays of pixels, in general one array of pixels per seat in the stadium) into which the video sequence has been divided is, in general, different from each other. The server may send each electronic device a corresponding array of pixels at any moment prior to the beginning of the event, provided the server has been informed of the location (seat) of the user of the electronic device. All this is managed by the managing entity, such as master computer.

An array of pixels is sent to each electronic device. The array comprises the collection of pixels to be sequentially displayed by the electronic device in order to contribute, together with other electronic devices showing other pixels, to the reproduction of the video. Which array is sent to each electronic device depends on the emplacement of the electronic device at the location, that is to say, on the row and column in the grandstand occupied by the user of the electronic device.

The communication between the server and each electronic device is carried out using a communication subsystem that enables access to the internet. The communication may be carried out using GPRS, 2G, 3G, 4G, 5G, LTE, WiFi, CatM, NB-IoT, Sigfox, Lora communication subsystems, any combination thereof or any other communication subsystem.

Once all the electronic devices of the users having obtained a ticket for sitting or standing in the location, or at least some electronic devices thereof, for example at least more than a predefined percentage of them, have received its respective array of pixels, the server - when indicated by the managing entity- sends a signal -trigger signal- to each electronic device indicating the time at which the display of the array of pixels must begin. This time indication or time stamp may be sent together with the array of pixels to be displayed. Alternatively, it may be sent at a different time with respect to the array of pixels to be displayed, for example, later, such as one or several minutes later. This is preferably accompanied by clock synchronization information.

In embodiments of the invention, the server time is used as clock synchronization information. This server time is the clock of the room server (multiplayer platform) to which the participating electronic devices belong. In this case, the server time is used by all electronic devices in order to work in a synchronized way. For example, a triggering signal is sent to the electronic devices, the triggering signal indicating that within certain time (i.e. a few seconds) of the server time -also referred to as network time-, all the electronic devices are simultaneously starting to display their corresponding array of pixels. The obtained accuracy is very high. In other embodiments of the invention, an external network time is used as clock synchronization information. For example, an external network time as provided by a suitable protocol, such as the Network Time Protocol (NTP) or the Precision Time Protocol (PTP), may be used.

In other embodiments of the invention, the triggering signal is sent well in advance with respect to the starting time of the live event. For example, the triggering signal may indicate that the display of the array of pixels must begin at certain time of the server time. Then, the server time must be compared with the time of the electronic device, so that the display of the array of pixels begins when the corresponding time in the electronic device is reached.

Therefore, even if the participating electronic devices have not exactly the same time, they all start the display substantially at the same time because the starting time has been synchronized with the server time. In this case, no network connectivity is required at the location during the live event, since electronic devices have already been synchronized. In other embodiments of the invention, the triggering signal may indicate that the display of the array of pixels must begin at certain time relative to the clock of the electronic device. This is less preferred because, if different electronic devices have different time, the display will not be correctly synchronized. In this case, no network connectivity is required at the location during the live event provided that the corresponding arrays of pixels have been previously sent to the participating electronic devices.

The speed at which the arrays must be displayed is also provided, for example in the form of a time delay between consecutive pixels in the array or in the form of the number of pixels to be displayed during a certain time slot (e.g. a second). Speed information may also be sent either together with the array of pixels to be displayed, and optionally with the time indication or time stamp in the case time indication is sent at the same time as the array of pixels to be displayed, or at a different time with respect thereto. The video to be displayed on the emulated screen formed by the participating electronic devices is thus ready to be displayed when requested.

A first aspect of the invention relates to a computer-implemented method for enabling spectators of a live event to participate in a light show using their electronic devices. The method comprises: providing a digital scheme representing an arrangement of seats in a location, the digital scheme comprising a number of N rows and a number of M columns, seats being located in at least some of pairs $x_i\,y_j$, $1 \leq i \leq M$ and $1 \leq j \leq N$; i, j being natural numbers; providing a video comprising a plurality of video frames, wherein each video frame has a resolution of R x C pixels, wherein R represents rows of pixels and C represents columns of pixels; converting the resolution of the video frames from R x C pixels to N x M pixels; for each pixel position of the N x M pixels in each video frame, which corresponds to a respective pair $x_i\,y_j$ in the digital scheme representing the arrangement of seats, creating an array of pixels comprising F pixels corresponding to pixel position of the video, F being the number of video frames comprised in the video, thus having N x M arrays of F pixels; using a communications interface, sending from a plurality of electronic devices to a server the coordinates of a seat in the location respectively assigned to a user of each electronic device; using a communications interface, sending from the server to each electronic device: the array of pixels corresponding to the seat assigned to the user of the electronic device; the speed at which the array of pixels is to be displayed; and a triggering signal indicating the time at which the display of the pixels comprised in the array must start in order for all the electronic devices to start the display at the same time.

In embodiments of the invention, the method further comprises sending from the server to each electronic device: clock synchronization information for synchronizing the participating electronic devices. Clock synchronization may be performed using the clock of the server (network time) or the Network Time Protocol (NTP) or the Precision Time Protocol (PTP).

In embodiments of the invention, the method further comprises simultaneously starting the display of the array of pixels in each participating electronic device at the time indicated in the triggering signal.

In embodiments of the invention, the sending and receiving information between the server and the electronic devices is managed by a managing entity.

In embodiments of the invention, the video frames are polychrome, wherein each pixel of the N x M arrays of pixels is represented by RGB values.

In embodiments of the invention, during the display of the array of pixels in an electronic device, the pixels in the array are displayed on a screen of the electronic device; or using a flash-type light of the electronic device; or some of the pixels in the array of pixels are displayed on a screen of the electronic device and some of them are displayed using a flash-type light of the electronic device.

When the pixels in the array are displayed using a flash-type light of the electronic device, depending on the RGB value taken by a pixel, the flash-type light of the electronic device is switched on or off.

In embodiments of the invention, the display of the pixels on the screen of the electronic device and/or using a flash-type light of the electronic device, is controlled by a software program executed at each electronic device. Alternatively, the display of the pixels on the screen of the electronic device and/or using a flash-type light of the electronic device is controlled by the managing entity through the server which, during the display of the array of pixels in each participating electronic device, sends to each electronic device a signal indicating whether to use the screen or the flash light of the electronic device.

In embodiments of the invention, the exchange of information between the server and the respective electronic devices is done through a wireless communications interface implementing GPRS, 2G, 3G, 4G, 5G, LTE, WiFi, CatM, NB-IoT, Sigfox or Lora.

In embodiments of the invention, the server is a multiplayer platform and the electronic devices belong to a room created at the server.

A second aspect of the invention relates to a system for enabling spectators of a live event to participate in a light show using their electronic devices. The system comprises: a plurality of electronic devices, wherein each electronic device of the plurality of electronic devices comprises: processing means; network connectivity; and means for displaying an image and/or for emitting light; means for, from a digital scheme representing the arrangement of seats in a location, the digital scheme comprising a number of N rows and a number of M columns, the seats being located in at least some of pairs $x_i\,y_j$, $1 \leq i \leq M$ and $1 \leq j \leq N$; i, j being natural numbers; and from a video comprising a plurality of video frames, wherein each video frame has a resolution of R x C pixels, wherein R represents rows of pixels and C represents columns of pixels: converting the resolution of the video frames from R x C pixels to N x M pixels; for each pixel position of the N x M pixels in each video frame, which corresponds to a respective pair $x_i$ $y_j$ in the digital scheme representing the arrangement of seats, creating an array of pixels comprising F pixels corresponding to the pixel position of the video, F being the number of video frames comprised in the video, thus having N x M arrays of F pixels; a server; and a managing entity. The plurality of electronic devices are configured for, using a communications interface, sending the coordinates of a seat respectively assigned to a user of each electronic device, to the server. The server is configured for, using a communications interface, when requested by the managing entity, sending to each electronic device: the array of pixels corresponding to the seat assigned to the user of the electronic device; the speed at which the array of pixels is to be displayed; and a triggering signal indicating the time at which the display of the pixels comprised in the array must start in order for all the electronic devices to start the display at the same time.

In embodiments of the invention, the electronic devices are portable. They may be, for example, smart phones, tablets, PDAs, smart watches, smart glasses, or any other portable device comprising processing means, such as a microprocessor; network connectivity, such as GPRS, 2G, 3G, 4G, 5G, LTE, WiFi, CatM, NB-IoT, Sigfox or Lora communication subsystem; and means for displaying an image and/or for emitting light, such as either a screen or a flash-like light or lantern, or both.

A third aspect of the invention relates to a computer program product comprising computer program instructions/code for performing the method already disclosed.

A fourth aspect of the invention relates to a computer-readable memory/medium that stores program instructions/code for performing the method already disclosed.

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 illustrates a photograph showing a stadium including the grandstands (top) and a digital scheme representing the arrangement of seats in the stadium (bottom) according to an embodiment of the present invention.

Figure 2 shows in detail a portion of the arrangement of seats of Figure 1.

Figure 3 shows a schematic representation of the system for enabling spectators of a live event to participate in a light show using their electronic devices, according to an embodiment of the invention.

Figure 4(a) shows a video frame before adapting its resolution. Figure 4(b) shows the same frame after adaptation of resolution. Figure 4(c) shows the frame disposed on the digital scheme representing the arrangement of seats at the location. Figure 4(d) shows the frame as it is displayed on the electronic devices occupying their seats at the location.

Figure 5 schematically shows an exemplary video sequence composed of F frames. Each frame is divided into N x M pixels, that is to say, has been adapted to the seats resolution. An array of F pixels to be sent to an electronic device is illustrated on the right.

Figure 6 shows a diagram including the time sequence of calls involved when an electronic device wants to participate in a light show, provides its seat location and is sent an array of pixels to be displayed during the light show, according to an embodiment of the invention.

Figure 7 shows a diagram including the time sequence of calls involved when a triggering signal is sent for indicating the beginning of the video display at the plurality of participating electronic devices, according to an embodiment of the invention.

Figure 8 shows a diagram including the time sequence of calls involved when the rate at which video frames must be displayed is sent to the electronic devices, according to an embodiment of the invention.

Figure 9 shows a diagram including the time sequence of calls involved when electronic devices must work in flash-light mode, according to an embodiment of the invention.

## DESCRIPTION OF A WAY OF CARRYING OUT THE INVENTION

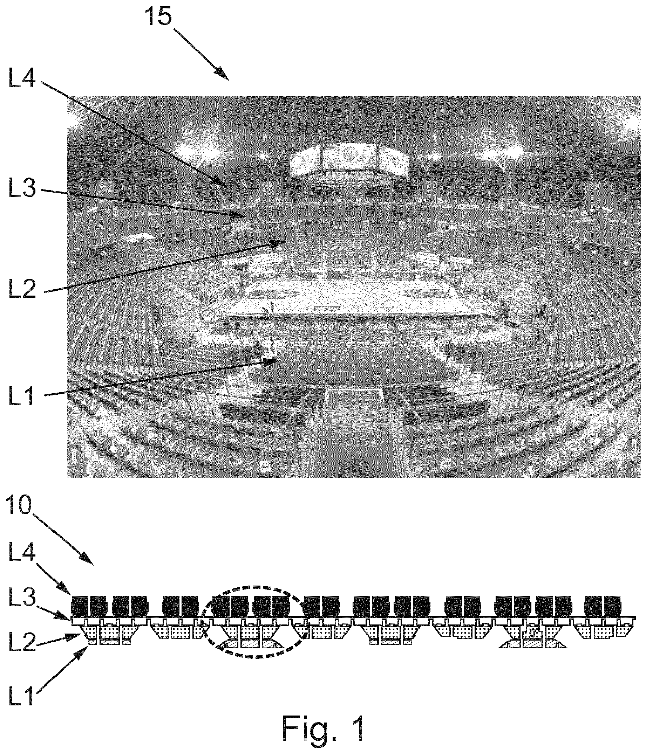

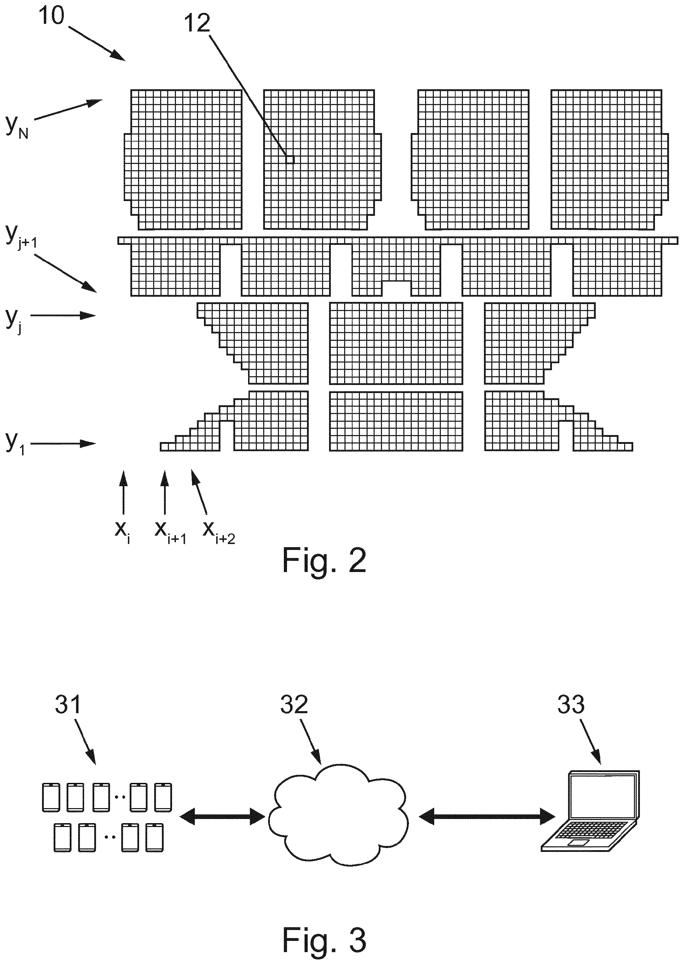

Figure 1 shows at the top a photograph of a stadium 15, including an almost complete view of the arrangement of seats (grandstands). At the bottom, a digital scheme 10 representing a flat representation of the arrangement of seats in the stadium is shown. The digital scheme 10 is a 2D representation of the complete grandstands. All the columns of seats are depicted in the X-axis and all the rows of seats are depicted in the Y-axis. The seats surrounded by a dotted line in the digital scheme (bottom image of Figure 1) correspond to the portion of seats shown in detail in Figure 2. Depending on the stadium, hall, theater, convention center, auditorium or any other location in which a live event is going to take place, the grandstand or seats may be arranged in different ways. For example, many grandstands, such as those of big stadiums or music halls, are divided in sectors, levels, rows and columns. In Figure 1, for example, the grandstand of the represented stadium has four levels L1, L2, L3, L4.

The digital scheme 10 representing the arrangement of seats comprises a number of N rows $Y_1$, ..., $y_j$, ..., $y_N$ and a number of M columns $x_1$, ..., $x_i$, ..., $x_M$, as shown in Figure 2, which represents the portion of the grandstand in Figure 1 (bottom) surrounded by a dotted line. Seats are located in at least some of pairs $x_i \, y_j$, wherein $1 \leq i \leq M$ and $1 \leq j \leq N$; i, j being natural numbers. The digital scheme 10 may include empty rows, empty columns or empty points or pairs ($x_i \, y_j$). Rows, columns or points are considered empty in the digital scheme 10 when they have no seats, for example because the corresponding area is occupied with aisles, security exits or separating areas between sectors or levels. In Figure 1 (bottom) the four different patterns denote respective levels of seats L1-L4, while empty rows, columns and points are left white. In Figure 2, seats 12 are indicated in the form of squares denoted with black outer lines, while empty areas are left white.

During a live event taking place at the stadium 15, the audience may participate in a light show using portable electronic devices. In particular, a video formed by a sequence of video frames is going to be shown in an emulated screen (virtual screen) formed by electronic devices of spectators seating or standing in the grandstand. Figure 3 shows a schematic representation of a system for enabling spectators of a live event to participate in a light show using their electronic devices. The system is comprised of electronic devices 31, such as smart phones, which will participate in the video display; a managing entity 33, such as a personal computer, which works as master and manages the whole execution of the light show; and a server or platform 32, such as a multiplayer platform. The electronic devices 31 work as clients of the server or platform 32, managed by managing entity 33. The server or platform 32 is preferably located in the cloud. Managing entity 33 may be a local computing device, in which case it needs network connectivity -either wired or wireless- to the Internet in order to communicate with server 32. Alternatively, it may be a remote software application located in the cloud and accessible through the Internet. Server 32 comprises processing means, such as one or more processors, and data storage means. A portion of memory and/or disc may be habilitated in the server 32 and/or in the managing entity 33 in order to store all the required information associated to the execution of the light show, including the video to be shown and other information, such as users' locations in the stadium and arrays of pixels corresponding to respective electronic devices of users, among other information.

Each participating electronic device 31 becomes a unique pixel in the video to be displayed. The pixels in each video frame must match the seats occupied by the spectators. This adaptation is done at a computing device, for example at managing entity 33 when it is implemented as a personal computer, or at any other device comprising processing means and software implementing video conversion functionalities. The adapted video to the seat resolution of the location 15 is taken to the managing entity 33 if it has been converted in a separate device.

The method is based on conceiving the grandstand of the stadium, hall or the like, as a collection of seats, wherein each seat corresponds to a pixel in the video frame to be displayed. In general, each video frame has a resolution of R x C pixels, wherein R represents rows of pixels and C represents columns of pixels. Because, in general, R x C is larger than N x M, that is to say, the video to be displayed has a pixel resolution higher than the seats resolution in the digital scheme (number of seats in the stadium), in order to adapt to the seats resolution, the video resolution must be adapted, normally reduced, in such a way that the original resolution of R x G pixels is converted to N x M pixels. Depending on different factors, such as the video to be displayed and the configuration of the grandstands, the grandstands may simultaneously emulate several virtual screens; for example, in a football stadium electronic devices may form two emulated screens in the grandstands behind each goal plus two other emulated screens in the grandstands at both sides along the field. In this case, the original video may be specially adapted to the seats resolution of the four different portions of grandstands.

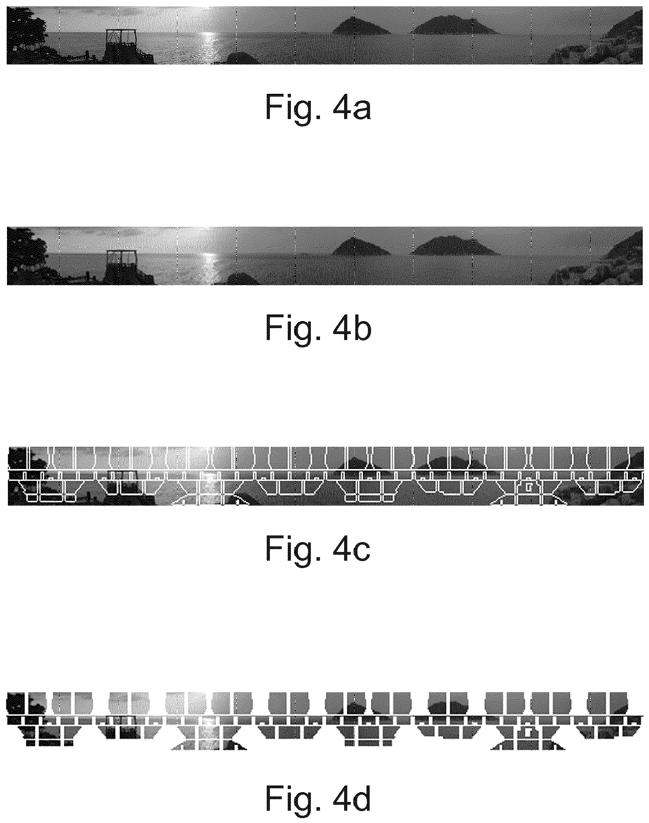

The conversion of video resolution may be done following conventional software products for video resolution conversion. Different techniques of video resolution conversion may be used, which are out of the scope of the present invention. After conversion, each pixel in the video frames forming the video to be displayed will correspond to a unique pixel represented by each electronic device. Therefore, after conversion, each video frame has a reduced number of pixels, such as N x M pixels. In other words, each video frame may now have as many pixels as rows N and columns M in the digital scheme. Each electronic device thus represents a unique pixel. This is illustrated in Figures 4(a-d). Figure 4(a) shows an original video frame having 8864 x 821 pixels. Figure 4(b) shows the reduced frame. Its resolution has been adapted to 640 x 50 pixels, in order to match the seat disposition of a sports stadium having 50 rows and 640 columns. Figure 4(c) shows the reduced frame disposed on the digital scheme representing the arrangement of seats at the location. Figure 4(d) represents the frame as it would look like when displayed on the electronic devices occupying their seats at the location. Frame pixels corresponding to areas of the grandstands not occupied by seats are not sent to electronic devices.

As a matter of example, during conversion, the R x C pixels of each video frame can be grouped in groups of pixels, wherein each of the groups has $\frac{R}{N}$ x $\frac{C}{M}$ pixels. In other words, there is one group of $\frac{R}{N}$ x $\frac{C}{M}$ pixels per pair $x_i$ $y_j$ in the digital scheme representing the arrangement of seats. Values $\frac{R}{N}$ and $\frac{C}{M}$ may be rounded off to the closest natural number if required. Then, each group of $\frac{R}{N}$ x $\frac{C}{M}$ pixels is converted, translated or mapped into one converted pixel, which will be the unique pixel of each electronic device.

In embodiments of the invention, when performing the video conversion, the empty rows, columns or single points are not taken into account. For example, they are not filled in. It is then assumed that the human eye is capable of filling in empty spaces when the video is displayed on the participating electronic devices. The same occurs with missing or non-participating electronic devices of users occupying a seat.

The resolution of the original video sequence is now adapted to a number of seats in the grandstands. Now, optionally, depending on circumstances, such as the type of video to be displayed and the specific configuration of the grandstands, for example, the already converted video frames may be mapped to the seats in different ways. For example, portions of video may be overlapped in different grandstands.

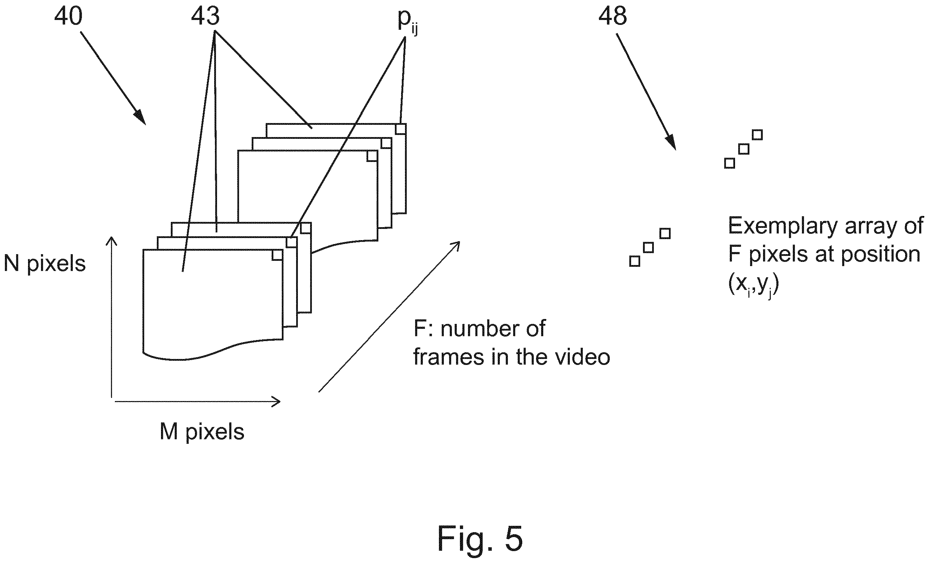

The video is formed by a sequence of frames. All the frames of the video sequence perform the same adaptation of resolution as described above. It has been assumed that there are N x M points or positions (many of them corresponding to seats 12 and the remaining ones corresponding to empty areas) in the grandstands or in a group of grandstands. Then, for each pixel of the N x M converted pixels in each video frame, an array of pixels of size F is created, F being the number of video frames comprised in the video sequence. This may be done at the managing entity 33. In other words, a video having F frames and having resolution of N x M, is divided into N x M arrays of F pixels per array. Therefore, the complete video sequence -also referred to as frame sequence- is formed by N x M arrays of F pixels per array. Figure 5 shows a video 40 having a plurality of video frames 43 (F frames) whose resolution has been adapted to the digital scheme representing the location of seats, that is to say, the resolution of each of the video frames 43 in Figure 5 is N x M. $p_{ij}$ represents the pixel position in each frame 43. On the right, an exemplary array 48 of F pixels at an exemplary location ($x_i$ $y_j$) is shown.

In order to accomplish and manage the exchange of information with the server 32 and managing entity 33, electronic devices 31 preferably have a software application (app) installed, such as an iOS app or an Android app. The exchange of information may be transparent to the user. The app may be downloaded to an electronic device 31 when the user having the electronic device reaches the stadium. In this case, the process of exchanging information between electronic device 31 and server 32 is performed already in the stadium. Alternatively, the user may already have the app installed in the electronic device 31, for example because it has already been used in another light show or because the user has installed it when he/she obtained the ticket. In this case, the process of exchanging information between electronic device 31 and server 32 may be accomplished before reaching the stadium.

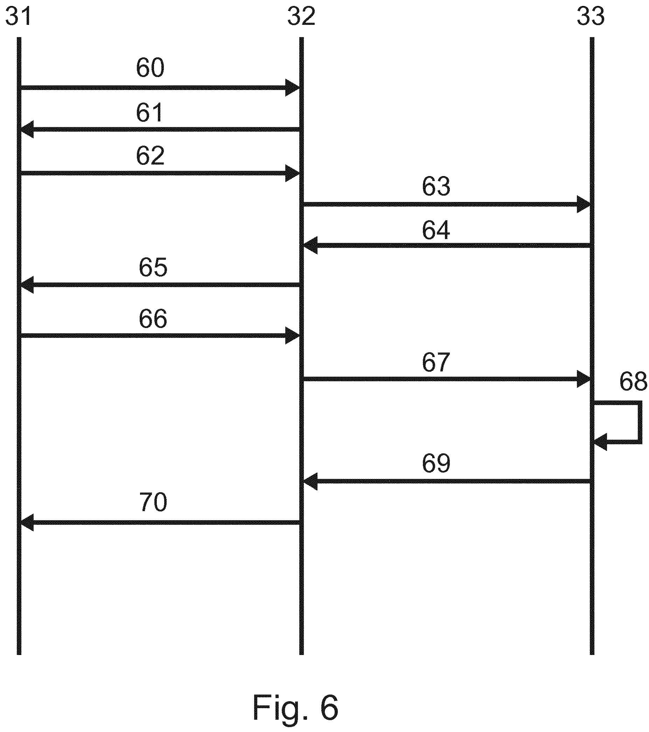

Figure 6 shows a diagram with the sequence of calls involved when an electronic device 31 wants to participate in a light show, until server 32 sends it its corresponding array of pixels. The sequence is controlled by managing entity 33. First, electronic device 31 sends a message 60 to the server or platform 32 indicating that it wants to join a room provided by server 32. A room is a group of concurrent users within a server. Room services are services typically located in the cloud. Such rooms are well-known in the field of video games, for example, in multiplayer systems. In this case, room users are the electronic devices 31. Message 60 may for example be: *JoinRoom("stadiumX")*, meaning that electronic device 31 wants to join the room created at the server 32 for the light show to take place at *stadium X.* In embodiments of the invention, the name of the server room associated to a light show to be displayed at a certain location is provided by the software application (app) installed in the electronic devices. This is in turn managed by managing entity 33. The app may have a list of server rooms -with different names- associated to different light shows scheduled at different locations. In this case, users will select in the app the light show of their interest, which will be the one to take place at the location for which they have tickets. Then, server 32 replies with a message 61 requesting the electronic device 31 an identification. Message 61 may for example be: *GiveMeYourID.* Next, the electronic device 31 sends the server its identification, for example in a message 62 as follows: *MyID = "abcd".* The electronic device 31 identified as *abcd* has thus joined the room called *stadiumX* created at platform 32. In order to join the room service, users 31 -electronic devices- previously receive the server address and the name of the room to which they want to belong, so that they can all be connected thereto. Each electronic device 31 (client of the room service) only knows the server 32 (for example its address and name) to which it connects. It does not know any other user 31 participating in the room. Electronic device 31 then needs to send the server its seat in the location.

Then, server 32 informs the managing entity 33 that a new electronic device 31 has joined the room. This is done through a message 63 that may be as follows: *HasJoinedRoom("abcd")*. Managing entity 33 replies to this message with another message 64, requesting the seat location of the new user. Message 64 may be: *WhatsYourXY("abcd")*. Server 32 then resends this message to electronic device 31, in a message 65 as follows: *WhatsYourXY*. Electronic device 31 replies with a message 66 in which its coordinates or seat location is provided. For example: *MyXY="n,m"*, wherein n, m for example respectively refer to row and column in the stadium.

At this moment, electronic device 31 has informed the server 32 about its coordinates or seat 12 in the location 15 (for example stadium). This is how, in an embodiment of the invention, each electronic device sends the coordinates of its assigned seat 12 (seat assigned to the user of the electronic device) to server 32. For example, it may send its position -for example sector, level, column. Or row and column as in exemplary message 66. Alternatively, instead of sending the coordinates of the assigned seat 12, the bar code or QR code of the ticket may be sent, from which the location of the user in the stadium may be extracted. In order to send the location in the stadium, it is not necessary that the spectator is already sitting/standing on his/her seat. In general, once the spectator is in possession of his/her ticket, and therefore knows which seat 12 has been assigned, electronic device 31 can inform the server 32 about its location in the stadium. Otherwise, the array 48 of pixels cannot be sent to the electronic device 31 of the spectator. If the spectator has an electronic ticket, the app may automatically send to server 32 the location 12 to be occupied by the spectator. For example, sector, level, row and column, or QR code or bar code, such that the computing device can assign the array 48 of pixels to be sent to the electronic device. Or, the spectator may actively send the coordinates of his/her seat 12 (sector, level, row, column...) to the server or the like, for example when the app requests the spectator to do so, so that the server can perform the pixels assignation according to coordinates $x_i$ $y_j$. This can also be done through a web page, transparently accessed by the app or actively accessed by the user.

Next, server 32 sends a message 67 to managing entity 33 informing that the new user (electronic device 31) will be sitting/standing in its seat. For example: *XY("abcd",n,m)*. The system (managing entity 33) is now ready to send electronic device 31 the array of pixels to be displayed during the live event, because server 32 (and managing entity 33) needs to know the position 12 in the grandstands to be occupied by the user having the respective electronic device.

This is expressed in Figure 6 with message 68, for example: *GetArray("abcd")*, meaning that managing entity 33 collects the corresponding array from a repository, situated either locally or in the cloud. Managing entity 33 then sends a message 69 to server 32, requesting the array of pixels to be sent to the new user. For example: *SendArray("abcd", array)*. Server 32 then sends the array to the electronic device 31, in a message 70, for example: *SendArray(array)*. Thus, managing entity 33, through server 32, sends each participating electronic device 31 the array 48 of pixels corresponding to its seat, for example seat $x_i$ $y_j$. Arrays 48 may be sent at any time prior to the execution of the light show in the electronic devices.

The different arrays 48 of pixels (N x M arrays of pixels to be displayed in N x M points (such as seats 12) in the stadium) into which the video sequence 40 has been divided is, in general, different from each other. Each array 48 of F pixels is sent to the electronic device corresponding to the seat 12 of the digital scheme 10 on which the spectator in possession of the electronic device is going to sit/stand. In other words, each electronic device receives the array 48 of F pixels that enable to sequentially reconstruct or display the original video 40 when it is displayed on the huge emulated screen formed by all (or some or many of) the electronic devices in the stadium or in a portion of the stadium. Each created array 48 of pixels is sent to a corresponding electronic device of the spectator occupying the corresponding seat $x_i$ $y_j$. For example, user sitting in seat "$x_{55}$ $y_{38}$" will receive the array of pixels corresponding to pixel "$x_{55}$ $y_{38}$" in the converted video frames 43.

Electronic devices 31 need to access the Internet in order to communicate with the server 32. Electronic devices 31 therefore need network connectivity by means of a wired or wireless communications interface. The communications interface is preferably wireless. The communications interface may be GPRS, 2G, 3G, 4G, 5G, LTE, WiFi, CatM, NB-IoT, Sigfox, Lora communication subsystems, any combination thereof or any other interface or communication subsystem that enables connection to the internet, depending on the facilities available at the location of the electronic device when the communication with the server 32 takes place. An electronic device 31 may send the data associated to its seat 12 once the ticket is obtained, provided the app has already been installed. This is done through the network coverage the electronic device may have (e.g. wired connection or wireless one, such as 4G or wifi). The data associated to the seat 12 may also be sent to the server once the user carrying his/her electronic device reaches the stadium to attend the event.

Prior to starting the display of the video sequence (frame sequence) on the plurality of electronic devices emulating a huge screen -or on at least some of the electronic devices (for example at least a predefined percentage, such as at least 50%, or at least 60%, or at least 70%, or at least 80% of the electronic devices corresponding to the occupied seats of the location or of a portion of the location), the server, following the request of the managing entity, sends to each electronic device, in addition to the respective array 48 of pixels to be displayed: (a) the speed at which the array of pixels is to be displayed in order to correctly display the video in the huge emulated screen; and (b) a signal triggering the display of the pixels comprised in the array in order for all the electronic devices to start the display at the same time. The sending of the speed- rate- of the video display and the triggering signal involve a time sequence of calls similar to the time sequence shown in Figure 6.

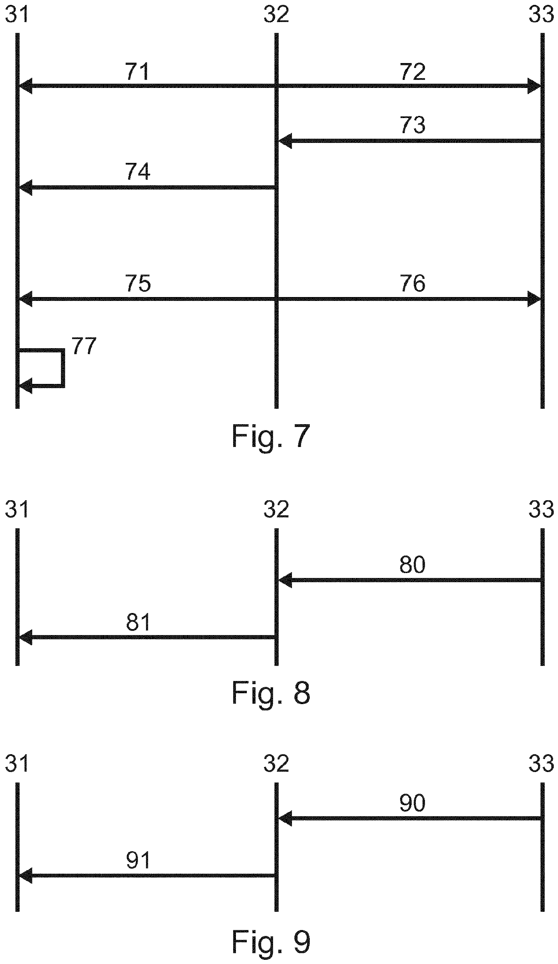

The triggering signal indicates when the display of pixels must start, that is to say, when the light show must start. This signal does not need to be sent simultaneously to the sending of the array of pixels or immediately afterwards. In embodiments of the invention, the triggering signal is sent to the electronic devices immediately before (for example a few seconds before) the time at which the light show is scheduled. Therefore, when it is sent, electronic devices are normally already at the location (such as stadium). In this case, electronic devices need network connectivity in order to receive the triggering signal, such as a time stamp, from the server. For example, the triggering signal may be sent within the minute prior to a scheduled beginning time of the light show, such as 10 seconds before the beginning time, or 5 seconds before it, or 2 seconds before it. An example of this embodiment is described with reference to Figure 7.

The speed may be indicated, for example, as a certain time delay between consecutive pixels in the pixels array. In other words, it may be indicated as a certain delay between consecutive video frames in the sequence of video frames. The speed may alternatively be indicated as a number of pixels to be displayed during a certain time slot (e.g. one second).

A clock synchronization signal for synchronizing all the involved electronic devices is preferably also sent from the server to the electronic devices. Clock synchronization information may be sent together -or substantially at the same time- with the triggering signal. Clock synchronization may be done in different ways.

In embodiments of the invention, the server time is used as clock synchronization information. Server 32 may have its own time, interchangeably referred to as network time, network clock or server time. In this context, the term "network" in "network time" or "network clock" refers to the group of users belonging to the room created at server 32. In other words, it refers to server 32 and its clients. This clock is a common clock referred to the network - server where the room resides- to which the electronic devices belong. Server time may be used in order to synchronize the electronic devices participating in the light show, in such a manner that they all begin the light show at a certain server time. This common clock is continuously sent in the network, so that users can read it at any time. In this case, the server time is used by all electronic devices belonging to the room, in order to work in a synchronized way. For example, the triggering signal indicates that within certain time (i.e. a few seconds) of the server time, all the electronic devices are simultaneously starting to display their corresponding array of pixels. This way, each electronic device checks the server time and, when the server time reaches the time indicated in the triggering signal, all the electronic devices start to display their respective arrays of pixels. Therefore, in this case the server time needs to be known all the time, and therefore network connectivity at the location is needed. The obtained accuracy is very high.

In other embodiments of the invention, an external network time is used as clock synchronization information. For example, an external network time (clock synchronization) as provided by a suitable protocol, such as the Network Time Protocol (NTP) or the Precision Time Protocol (PTP), may be used. In this case, network connectivity at the location is also needed.

In other embodiments of the invention, the server time is used as clock synchronization information, but in this case the triggering signal is sent well in advance with respect to the starting time of the life event. In this case, the triggering signal indicates that the display of the array of pixels must begin at certain time of the server time. Then, the server time, to which electronic devices have already access because they belong to a room specially created for the light show to be displayed during the live event, must be compared with the time of each electronic device, so that the display of the array of pixels begins when the corresponding time -previously matched with the server time- in the electronic device is reached. Therefore, even if the participating electronic devices have not exactly the same time, they all start the display substantially at the same time because the starting time has been synchronized with the server time. In this case, no network connectivity is required at the location 15 during the live event, since electronic devices have already been synchronized, provided the array of pixels has been previously sent to respective electronic devices.

In other embodiments of the invention, the triggering signal indicates that the display of the array of pixels must begin at certain time relative to the clock of the electronic device. This is less preferred because, if different electronic devices have different time, as it is usually, the display will not be correctly synchronized. In this case, no network connectivity is required at the location 15 during the live event. The accuracy might be slightly worse, such as in the order of several milliseconds ($10^{-3}$ seconds). It is also possible to calculate, for each electronic device, the time of its clock with respect to the server time and send each electronic device the server time together with its corresponding delay or lag in order to improve accuracy.

The required synchronization policies in order to achieve the desired effect at each location (stadium, hall, etc.), depend on different criteria, such as the characteristics of the location (size, shape...) and/or the show's necessities. Depending on the required synchronization policies, for example the speed at which frames must be displayed, may vary. The video to be displayed on the emulated screen formed by the participating electronic devices is thus ready to be displayed when requested.

A time sequence of calls for sending the triggering signal and executing the beginning of the video display at the plurality of participating electronic devices is illustrated in Figure 7, according to an embodiment of the invention. In Figure 7, reference 31 denotes all electronic devices belonging to the created room at server 32. First, server (multiplayer platform) 32 sends a message 71 to all electronic devices 31 and a message 72 to managing entity 33. This is done substantially simultaneously. These messages 71, 72 inform about the instant network time. For example: *NetworkTime(X)*, indicating that the instant network time is *X*. Then, managing entity 33 sends a message 73 to server 32, requesting it to begin the light show a certain time (for example several seconds) after the instant network time. Message 73 may for example be: *PlayAll(X+5)*, which means that all the electronic devices 31 must start to display their arrays of pixels 5 seconds after time *X*. In general, the content of this message is X+T, X being the instant network time and T being an additional period of time, such that the display of the arrays of pixels must start at X+T. Server 32 then sends message 74 to all electronic devices 31, for example: *PlayIn(X+5)*. Next, server 32 continuously sends messages, similar to 71, 72, to electronic devices 31 and to managing entity informing about the actual (instant) network time. In Figure 7, messages 75, 76 may for example be: *NetworkTime(X+5)*, meaning that the server time matches the time scheduled for the display (see messages 73, 74). Finally, when electronic devices receive the message indicating that the network time coincides the time scheduled for the beginning of the light show, they know the display must start. In the example, at network time *X+5* seconds all the electronic devices 31 begin to display their arrays, as denoted by message 77, for example: *Play()*. It might happen that electronic devices do not receive message 71, 75 exactly at the same time as other electronic devices. However, since all have the same time, thanks to the network time, and all are scheduled to start displaying at the same time X+T, they eventually start displaying the arrays of pixels simultaneously. In sum, period of time T (5 seconds in the example) guarantees that the triggering signal reaches all the devices and therefore they all start displaying at the same time. In embodiments of the invention, T is selected to be between 0.1 and 20 seconds, such as between 0.5 and 10 seconds, or between 1 and 8 seconds, or between 3 and 7 seconds.

A time sequence of calls for sending the speed or rate at which video frames -individual pixels at individual electronic devices- must be displayed, is illustrated in Figure 8, according to an embodiment of the invention. In Figure 8, reference 31 denotes all electronic devices belonging to the created room at server 32. First, managing entity 33 sends a message 80 to server (multiplayer platform) 32. In this message 80, the rate at which all electronic devices must display their arrays of pixels is indicated. For example: *FrameRateAll(25)*, means that electronic devices 31 must display their arrays of pixels at a rate of 25 pixels per minute. Then, server 32 sends a message 81 to all electronic devices 31. Message 81 may be: *FrameRate(25)*.

As already indicated, the participating electronic devices are preferably provided with an app, such as an iOS app or an Android app, to manage the exchange of information between electronic devices and server (seat coordinates, pixels array, time of beginning of light show, delay between consecutive pixels in the array, among others) preferably in a way transparent to the user.

In order to participate in a light show during the live event taking place in the stadium or the like, each electronic device may need a screen, a flash-type light or both. A flash-type light may be implemented by a lantern functionality. The electronic devices may participate in the light show in different ways.

In a preferred embodiment, the video to be displayed is polychrome, that is to say, each pixel of the N x M arrays of pixels is represented by RGB values typically ranging from 0 to 255. In polychrome frames, each array of pixels contains the different colors the F pixels in the array will require in order to represent the corresponding portion of the frame sequence. Each unique pixel has a single color (expressed as values of RGB), but the sequence of F pixels in each array may have different colors. The execution of the array of pixels on the screen or through a flash light (light ON or OFF) may be controlled by an algorithm installed in each electronic device, for example integrated in the already mentioned app. This algorithm, in the form of an executable software or computer program, may be sent from the server to each electronic device, for example together with the remaining sent information (array of pixels, time of beginning of light show, speed or delay between consecutive pixels in the array, etc.). The algorithm may be executed for example when the signal indicating the start of the light show is triggered. Then, all the participating electronic devices run this algorithm simultaneously.

In a possible implementation, the algorithm indicates that the whole array of pixels must be shown on the screen of the electronic device. In this case, the app takes control on the screen and sequentially displays the pixels of the array at the speed already indicated by the server.

In another possible implementation, the algorithm indicates that the whole array of pixels must be shown using the flash-type light of the electronic device. In this case, the app takes control on the lantern or flashlight of the electronic device and sequentially switches the light on or off depending on the pixel information of each pixel in the array. The decision to switch the light on or off may be done according to different criteria, included in the algorithm, for expressing each pixel coded with certain values of RGB as "light" or "no light". In a particular, non-limitative example, the light is ON when, for each pixel in the array, the red value > 150 and the green value > 150 and the blue value > 150. Other criteria or combinations of criteria may be used instead.

In another possible implementation, the algorithm changes from screen mode to flash-light mode dynamically; changes may be done according to a specific pattern already programmed; or changes may be periodic, for example every ten seconds there is a change in mode of execution from flash-type light to screen and vice versa; or changes may be random or pseudo-random.

Alternatively to the algorithm installed in each electronic device for controlling the execution of the array of polychrome pixels, the execution of the array of pixels on the screen or through a flash light (light ON or OFF) may be controlled from the managing entity (master) through the server, which in real time sends each electronic device a signal indicating whether to use the screen or the flash light of the electronic device. That is to say, the server, managed by the managing entity, sends each electronic device information indicating the element (flash-type light or screen) of the electronic device to be used during the performance. In the context of the present disclosure, the term "real time" refers to a time less than 1 second, such as less than 500 ms (milliseconds, $10^{-3}$ seconds), or less than 100 ms. Taking into account current technology, the minimum value of such time may be, for example but without limitation, 1 ms. Nevertheless, one skilled in the art will understand that the evolution of technology may enable to reduce the minimum value to a minimum value smaller than 1 ms.

In another embodiment, the video to be displayed is monochrome, that is to say, each pixel of the N x M arrays of pixels is represented by a binary digit "1" or "0". In this case, the execution of the array of pixels on the screen is through the flash light (light ON or OFF), in such a way that when a pixel is coded as "1" the flash light is switched on and when a pixel is coded as "0" the flash light is switched off. This is preferably controlled by an algorithm installed in each electronic device, for example integrated in the already mentioned app. The algorithm may be executed for example when the signal indicating the start of the light show is triggered. In this embodiment, the flash-like light or lantern of the electronic device can be used to represent a monochrome pixel, in such a way that, when executing the display of an array of pixels, the flash-like light (or lantern) is switched on when a pixel is "on" (indicating "light on") and it is switched off when the pixel is "off" (indicating "light off") in the array. In this case a screen is not required, although a screen can be used, alternatively, to show a monochrome pixel.

Figure 9 illustrates an exemplary time sequence of calls between the involved entities, for requesting the electronic devices to operate in flash-light mode. In Figure 9, reference 31 denotes all electronic devices belonging to the created room at server 32. First, managing entity 33 sends a message 90 to server (multiplayer platform) 32. In this message 90, it is indicated that all the electronic devices must use their flash light (for example lantern). Message 90 for example may be: *ScreenOrFlashAll(flash)*. Then, server 32 sends a subsequent message 91 to all electronic devices 31. Message 91 may be: *ScreenOrFlash(flash)*.

As a skilled person in the art is aware of, there are many others time sequences of calls involving other requests, such as the management of reconnections, resending of videos to all electronic devices, and others, which may be implemented following a similar way.

In this text, the word "comprises" and its variants (such as "comprising", etc.) are not to be interpreted in an exclusionary manner, that is to say, they do not exclude the possibility that what is described includes other elements, steps etc.

In the context of the present invention, the term "approximately" and the terms in its family (such as "approximate", etc.) are to be understood as indicative values which are very close to those which accompany the previously mentioned term. That is to say, a deviation within the acceptable limits based on an exact value should be accepted since the person skilled in the art understands that said deviation based on the indicated values is inevitable due to the imprecisions of the measurement, etc. The same applies to the terms "around" and "substantially".

In addition, the invention is not limited to the specific embodiments which have been described, but also covers, for example the variants which can be realised by the person skilled in the art (for example, in terms of the selection of materials, dimensions, components, configuration, etc.), within the scope of what can be deduced from the claims.

## Claims

1. A computer-implemented method for enabling spectators of a live event to participate in a light show using their electronic devices, the method comprising:

    providing a digital scheme (10) representing an arrangement of seats in a location (15), the digital scheme (10) comprising a number of N rows ($y_0$, $y_1$...$y_N$) and a number of M columns ($x_0$, $x_1$...$x_M$), seats (12) being located in at least some of pairs $x_i$ $y_j$, $1 \leq i \leq M$ and $1 \leq j \leq N$; i, j being natural numbers;
    providing a video comprising a plurality of video frames, wherein each video frame has a resolution of R x C pixels, wherein R represents rows of pixels and C represents columns of pixels;
    converting the resolution of the video frames from R x C pixels to N x M pixels;
    for each pixel position ($p_{ij}$) of the N x M pixels in each video frame (43), which corresponds to a respective pair $x_i$ $y_j$ in the digital scheme (10) representing the arrangement of seats (12), creating an array of pixels (48) comprising F pixels corresponding to pixel position ($p_{ij}$) of the video, F being the number of video frames comprised in the video, thus having N x M arrays of F pixels; using a communications interface, sending from a plurality of electronic devices (31) to a server (32) the coordinates of a seat (12) in the location (15) respectively assigned to a user of each electronic device (31);

using a communications interface, sending from the server (32) to each electronic device (31):

the array of pixels (48) corresponding to the seat (12) assigned to the user of the electronic device (31);
the speed at which the array of pixels is to be displayed; and
a triggering signal indicating the time at which the display of the pixels comprised in the array (48) must start in order for all the electronic devices (31) to start the display at the same time.

2. The method of claim 1, further comprising sending from the server (32) to each electronic device (31) clock synchronization information for synchronizing the participating electronic devices (31).

3. The method of claim 2, wherein clock synchronization is performed using the clock of the server (32) or the Network Time Protocol (NTP) or the Precision Time Protocol (PTP).

4. The method of any one of claims 1-3, further comprising simultaneously starting the display of the array of pixels (48) in each participating electronic device (31) at the time indicated in the triggering signal.

5. The method of any one of the preceding claims, wherein the sending and receiving information between the server (32) and the electronic devices (31) is managed by a managing entity (33).

6. The method of any one of the preceding claims, wherein the video frames are polychrome, wherein each pixel of the N x M arrays of pixels is represented by RGB values.

7. The method of any one of the preceding claims, wherein during the display of the array of pixels in an electronic device (31), the pixels in the array are displayed either on a screen of the electronic device (31) or using a flash-type light of the electronic device (31).

8. The method of claims 6 and 7, wherein, when the flash-type light of the electronic device (31) is used, for each pixel in the array of pixels (48), depending on the RGB value taken by a pixel, the flash-type light of the electronic device is switched on or off.

9. The method of any one of the preceding claims, wherein during the display of the array of pixels (48) in an electronic device (31), some of the pixels in the array of pixels are displayed on a screen of the electronic device (31) and some of them are displayed using a flash-type light of the electronic device (31).

10. The method of any one of the preceding claims, wherein the display of the pixels on the screen of the electronic device and/or using a flash-type light of the electronic device is controlled by a software program executed at each electronic device (31).

11. The method of any one of the preceding claims, wherein the exchange of information between the server (32) and the respective electronic devices (31) is done through a wireless communications interface implementing GPRS, 2G, 3G, 4G, 5G, LTE, WiFi, CatM, NB-IoT, Sigfox or Lora.

12. The method of any one of the preceding claims, wherein the server (32) is a multiplayer platform and the electronic devices (31) belong to a room created at the server (32).

13. A system for enabling spectators of a live event to participate in a light show using their electronic devices, the system comprising:

- a plurality of electronic devices (31), wherein each electronic device of the plurality of electronic devices comprises: processing means; network connectivity; and means for displaying an image and/or for emitting light;
- means for, from a digital scheme (10) representing the arrangement of seats in a location (15), the digital scheme (10) comprising a number of N rows ($y_0, y_1...y_N$) and a number of M columns ($x_0, x_1...x_M$), the seats being located in at least some of pairs $x_i y_j$, $1 \leq i \leq M$ and $1 \leq j \leq N$; i, j being natural numbers; and from a video comprising a plurality of video frames, wherein each video frame has a resolution of R x C pixels, wherein R represents rows of pixels and C represents columns of pixels:

converting the resolution of the video frames from R x C pixels to N x M pixels;
for each pixel position ($p_{ij}$) of the N x M pixels in each video frame (40), which corresponds to a respective pair $x_i y_j$ in the digital scheme (10) representing the arrangement of seats, creating an array of pixels (48) comprising F pixels corresponding to the

pixel position ($p_{ij}$) of the video, F being the number of video frames comprised in the video (40), thus having N x M arrays (48) of F pixels;

- a server (32);
- a managing entity (33);

the plurality of electronic devices (31) being configured for, using a communications interface, sending the coordinates of a seat (12) in the location (15) respectively assigned to a user of each electronic device, to the server (32);

the server (32) being configured for, using a communications interface, when requested by the managing entity (33), sending to each electronic device:

the array of pixels (48) corresponding to the seat assigned to the user of the electronic device;

the speed at which the array of pixels (48) is to be displayed; and

a triggering signal indicating the time at which the display of the pixels comprised in the array (48) must start in order for all the electronic devices to start the display at the same time.

14. The system of claim 13, wherein the electronic devices (31) are portable.

15. A computer program product comprising computer program instructions/code for performing the method according to any one of claims 1-13 or a computer-readable memory/medium that stores program instructions/code for performing the method according to any one of claims 1-13.

15

L4

L3

L2

L1

10

L4
L3
L2
L1

Fig. 1

Fig. 2

Fig. 3

Fig. 4a

Fig. 4b

Fig. 4c

Fig. 4d

40

43

$p_{ij}$

48

N pixels

M pixels

F: number of
frames in the video

Exemplary array of
F pixels at position
$(x_i, y_j)$

Fig. 5

EP 3 796 151 A1

Fig. 6

Fig. 7

Fig. 8

Fig. 9

Europäisches
Patentamt

European
Patent Office

Office européen
des brevets

# EUROPEAN SEARCH REPORT

Application Number

EP 19 38 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2018/136893 A1 (MIRARCHI ALBERTO [CA] ET AL) 17 May 2018 (2018-05-17)<br>* paragraphs [0007], [0046] - [0081]; figures 1-7 *<br>----- | 1,2,4-7, 11-15<br>3,8-10 | INV.<br>G06F3/14<br>H04M1/22<br>G09G3/20<br>G09G5/12 |
| X | US 2003/017823 A1 (MAGER GARY N [US] ET AL) 23 January 2003 (2003-01-23)<br>* paragraphs [0036], [0042] - [0047], [0056]; figures 1-5, 7a-7b *<br>----- | 1-15 | |
| Y | CN 106 782 293 A (WU FAN) 31 May 2017 (2017-05-31)<br>* paragraphs [0001], [0086], [0107]; figures 9,14 *<br>----- | 3,8-10 | |
| Y | WO 2014/096861 A2 (CROWD CONNECTED LTD [GB]) 26 June 2014 (2014-06-26)<br>* pages 24,26,33; figures 1-3 *<br>----- | 3,8-10 | |
| | | | TECHNICAL FIELDS SEARCHED (IPC)<br><br>G06F<br>G09G<br>H04M |

The present search report has been drawn up for all claims

| Place of search | Date of completion of the search | Examiner |
|---|---|---|
| The Hague | 6 April 2020 | Pichon, Jean-Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                            
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 38 2811

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2020

| Patent document cited in search report | | Publication date | Patent family member(s) | | Publication date |
|---|---|---|---|---|---|
| US 2018136893 | A1 | 17-05-2018 | CN 107533449 A | | 02-01-2018 |
| | | | EP 3295453 A1 | | 21-03-2018 |
| | | | US 2018136893 A1 | | 17-05-2018 |
| | | | WO 2016182541 A1 | | 17-11-2016 |
| US 2003017823 | A1 | 23-01-2003 | AU 2002320569 A1 | | 03-03-2003 |
| | | | US 2003017823 A1 | | 23-01-2003 |
| | | | WO 03009566 A2 | | 30-01-2003 |
| CN 106782293 | A | 31-05-2017 | NONE | | |
| WO 2014096861 | A2 | 26-06-2014 | GB 2509157 A | | 25-06-2014 |
| | | | GB 2509202 A | | 25-06-2014 |
| | | | GB 2531186 A | | 13-04-2016 |
| | | | WO 2014096861 A2 | | 26-06-2014 |

EPO FORM P0459

For more details about this annex : see Official Journal of the European Patent Office, No. 12/82